# EUROPEAN PATENT APPLICATION

(11) **EP 4 822 770 A1**
(43) Date of publication of application: **14.10.2026**
(21) Application number: 25835912.4
(22) Date of filing: 30.05.2025
(51) Int. Cl.: H01M 4/36, H01M 4/38, H01M 4/583, H01M 10/0525

(54) **NEGATIVE ELECTRODE MATERIAL AND SECONDARY BATTERY**

(30) Priority: 27.09.2024 CN 202411377512
(71) Applicant: BTR New Material Group Co., Ltd., Shenzhen, Guangdong 518106 (CN)
(72) Inventor: AN, Weili, Shenzhen, Guangdong 518106 (CN); HE, Peng, Shenzhen, Guangdong 518106 (CN); XIAO, Chengmao, Shenzhen, Guangdong 518106 (CN); GUO, Eming, Shenzhen, Guangdong 518106 (CN); XIAO, Ran, Shenzhen, Guangdong 518106 (CN)
(74) Representative: Hautier IP - MC/EP
(86) International application number: PCT/CN2025/098606
(87) International publication number: WO 2026/012009

(57) **Abstract**

An anode material and a secondary battery provided. The anode material includes silicon-carbon material, the silicon-carbon material includes silicon-based material and carbon-based material, and at least part of the carbon-based material is distributed within the silicon-based material; by testing through Raman spectroscopy, the anode material has first characteristic peak at 515±10 cm⁻¹ with peak intensity M1, second characteristic peak at 305±10 cm⁻¹ with peak intensity M2, and third characteristic peak at 925±10 cm⁻¹ with peak intensity M3, and the silicon-based material has oxygen protection degree Q, Q=M1/M2+M1/M3, 1.5≤Q≤4.5, and M2>M3. Q of the silicon-based material of the anode material is controlled between 1.5 to 4.5, which reduces occurrence of side reactions between the anode material and electrolyte, and enables formation of an appropriate amount of oxide on surface of the silicon-based material to alleviate volume expansion of the silicon-based material.

## Description

### CROSS-REFERENCE TO RELATED APPLICATIONS

The present application claims the priority of Chinese patent application No. 202411377512.X filed with the China National Intellectual Property Administration on September 27, 2024, titled with "ANODE MATERIAL AND SECONDARY BATTERY", the content of which is incorporated herein by reference in its entirety.

### TECHNICAL FIELD

The present application relates to the field of anode materials. The present application relates to an anode material and a secondary battery.

### BACKGROUND

In recent years, lithium ion batteries are widely used in electric vehicles and consumer electronics due to their high energy density, excellent power output, long cycle life, and low environmental pollution. In order to further improve the energy density of the lithium ion batteries, research and development on an anode material, particularly a silicon anode material, has become particularly important. However, the silicon anode material exhibits significant volume expansion during lithium intercalation and deintercalation, causing the silicon anode material to be easily pulverizee and peeled off from the current collector during charging and discharging. This situation disrupts the electrical contact between the active material and the current collector, leading to electrochemical performance degradation, capacity fading, and weakened cycle stability, thereby making it difficult to achieve commercial application. To address the above problems of poor conductivity and cycling performance in the silicon-based material, researchers have attempted to coat silicon-based materials with a carbon-based material. However, the existing preparation processes for carbon coating are quite complex, and a single carbon coating cannot effectively improve the electrochemical performance of the silicon-carbon anode material.

Therefore, to overcome the problems of large volume expansion, poor cycling performance, and poor conductivity present in the prior art, there is an urgent need to develop a silicon-carbon anode material with good conductivity and long cycle life to meet practical application requirements.

### SUMMARY

To at least solve one or more of the above technical problems, embodiments of the present application proposes solutions to improve the prior art in several aspects.

In a first aspect, embodiments of the present application relates to an anode material. The anode material includes a silicon-carbon material. The silicon-carbon material includes a silicon-based material and a carbon-based material, and at least part of the carbon-based material is distributed within the silicon-based material.

By testing the anode material through a Raman spectroscopy, the anode material has a first characteristic peak at 515±10 cm⁻¹ with a peak intensity represented as M1, a second characteristic peak at 305±10 cm⁻¹ with a peak intensity represented as M2, and a third characteristic peak at 925±10 cm⁻¹ with a peak intensity represented as M3. The silicon-based material has an oxygen protection degree represented as Q, and Q, M1, M2, and M3 of the anode material satisfy relationships as follow: Q=M1/M2+M1/M3, 1.5≤Q≤4.5, and M2>M3.

In a second aspect, embodiments of the present application provides a secondary battery including the anode material described in the first aspect.

The secondary battery provided by the second aspect of embodiments of the present application possesses advantages such as high capacity, high initial efficiency, long cycle life, excellent rate performance, and low expansion.

The advantages of this application will be partially set forth in the following description.

### BRIEF DESCRIPTION OF DRAWINGS

The above and other objects, features, and advantages of the exemplary embodiments of the present disclosure will become more readily appreciated by reading the following detailed description with reference to the accompanying drawings. In the drawings, several embodiments of the present disclosure are shown by way of example rather than limitation, and identical or corresponding reference numerals denote identical or corresponding parts, in which:
FIG. 1 shows the Raman test spectrum of the anode material of Example 1.
FIG. 2 shows the scanning electron microscope image of the anode material of Example 1.
FIG. 3 shows the XRD pattern of the anode material of Example 1.
FIG. 4 shows the cycling performance curve of the anode material of Example 1, with a charge-discharge current of 1000 mA/g.

### DESCRIPTION OF EMBODIMENTS

The technical solutions of the present application will be clearly and completely described below in conjunction with the specific embodiments and relevant drawings of the present application. Obviously, the described embodiments are a part of the embodiments of the present application, rather than all of the embodiments. Based on the embodiments in the present application, all other embodiments obtained by those skilled in the art without creative labor shall fall within the protection scope of the present application.

It should be appreciated that the terms "include" and "comprise" used in the specification and claims of the present application indicate the presence of the described features, integers, steps, operations, elements, and/or components, but do not exclude the presence or addition of one or more other features, integers, steps, operations, elements, components, and/or collections thereof.

It should also be appreciated that the terminology used in the specification of the present application is for the purpose of describing particular embodiments only and is not intended to limit the present application. As used in the specification and claims of the present application, the singular forms "a", "an", and "the" are intended to include the plural forms as well, unless the context clearly indicates otherwise. It should be further appreciated that the term "and/or" as used in the specification and claims of the present application refers to any and all possible combinations of one or more of the associated listed items, and includes such combinations.

As used in this specification and claims, the term "if" may be interpreted as "when" or "once" or "in response to determining" or "in response to detecting" depending on the context. Similarly, the phrase "if determined" or "if [a described condition or event] is detected" may be interpreted as meaning "once determined" or "in response to determining" or "once [a described condition or event] is detected" or "in response to detecting [a described condition or event]" depending on the context.

The specific embodiments of the present application are described in detail below with reference to the accompanying drawings. Unless otherwise specified, the materials, reagents, and equipment used in the embodiments of the present application are all obtained through conventional commercial channels.

An embodiment of the present application provides a secondary battery (such as a lithium ion battery and a sodium ion battery), including a shell, an electrode assembly, and an electrolyte solution/electrolyte. Both the electrode assembly and the electrolyte solution/electrolyte are located within the shell.

The shell may be a packaging bag obtained by encapsulation with a packaging film (such as an aluminum-plastic film), for example, the secondary battery is a pouch battery. In other embodiments, the secondary battery may also be a steel-shell battery, an aluminum-shell battery, or the like.

The secondary battery includes a cathode plate, an anode plate, and a separator disposed between the cathode plate and the anode plate. The electrode assembly may be a laminated structure formed by alternately stacking the cathode plate, the separator, and the anode plate in sequence. In other embodiments, the electrode assembly may also be a wound structure formed by stacking a cathode plate, a separator, and an anode plate in sequence and then winding them.

### Cathode Plate

A cathode plate includes a cathode current collector and a cathode active layer disposed on at least one surface of the cathode current collector. The cathode current collector may use aluminum foil, nickel foil, or the like, or may be any composite current collector described by the prior art, for example, but not limited to, a current collector formed by combining the above conductive foil and a polymer substrate. The cathode active layer contains a cathode active material, and the cathode active material includes a compound capable of reversibly intercalating and deintercalating metal ions. In some embodiments, the cathode active material includes a lithium transition metal composite oxide, a sodium transition metal composite oxide, and the like. The lithium transition metal composite oxide contains lithium and at least one element of cobalt, manganese, and nickel. In some embodiments, the cathode active material includes, but is not limited to, at least one of lithium cobalt oxide (LiCoO₂), lithium nickel manganese cobalt ternary material (NCM), lithium manganese oxide (LiMn₂O₄), lithium nickel manganese oxide (LiNi_{0.5}Mn_{1.5}O₄), or lithium iron phosphate (LiFePO₄).

### Anode Plate

An anode plate includes an anode current collector and an anode active material layer disposed on at least one surface of the anode current collector. The anode current collector may use at least one of copper foil, nickel foil, stainless steel foil, titanium foil, carbon-based current collector, or the like, or may be any composite current collector described by the prior art, for example, but not limited to, a current collector formed by combining the above conductive foil and a polymer substrate. The anode active material layer includes an anode material.

During battery working, that is, during the discharging state of the battery, the metal ions (such as lithium ions) in the anode are deintercalated from the lattice of the anode material, pass through the electrolyte solution/electrolyte and the separator, and are intercalated into the lattice of the cathode material.

Conversely, when the battery is charged by applying an external circuit, the oxidation of the cathode material causes the metal ions (such as lithium ions) in the cathode to be deintercalated from the lattice of the cathode material, pass through the electrolyte solution/electrolyte and the separator, and move to the anode. Meanwhile, the anode material occurs a reduction reaction, causing the metal ions to be intercalated into the lattice of the anode material.

As the metal ions shuttle back and forth between the anode and cathode, the battery can achieve discharge and charge processes over thousands of cycles.

The performance of an anode material containing a silicon-based material and a carbon-based material is mainly influenced by the relevant properties of the carbon-based material and the silicon-based material, as there are interferences and synergistic effects between the silicon-based material and the carbon-based material. Only by maximizing the positive synergistic effect between the silicon-based material and the carbon-based material while inhibiting their negative interference, the anode material containing the silicon-based material and the carbon-based material exhibits good electrochemical performances.

Embodiments of the present application provides an anode material. The anode material includes a silicon-carbon material. The silicon-carbon material includes a silicon-based material and a carbon-based material, and at least part of the carbon-based material is distributed within the silicon-based material. By testing the anode material through a Raman spectroscopy, the anode material has a first characteristic peak at 515±10 cm⁻¹ with a peak intensity represented as M1, a second characteristic peak at 305±10 cm⁻¹ with a peak intensity represented as M2, and a third characteristic peak at 925±10 cm⁻¹ with a peak intensity represented as M3. The silicon-based material has an oxygen protection degree represented as Q, and Q, M1, M2, and M3 of the anode material satisfy relationships as follow: Q=M1/M2+M1/M3, 1.5≤Q≤4.5, and M2>M3.

In the above solution, the first characteristic peak (515±10 cm⁻¹) is to characterize the resonance vibration peak among Si-Si atoms in crystalline silicon, and its peak intensity and shape reflect the crystal structure and impurity content of silicon. When the first characteristic peak deviates, it reflects the stress distribution on surface of monocrystalline silicon. Specifically, if stress is present in an object, certain stress-sensitive bands will shift and deform. Within the elastic range, the change in Raman peak frequency shift is proportional to the applied stress. When subjected to a compressive stress, the band shifts toward the high-frequency direction; conversely, when subjected to a tensile stress, the band shifts toward the low-frequency direction. The second characteristic peak (305±10 cm⁻¹) is to characterize the Si-O-Si vibration peak of stable silicon oxide, reflecting the structure and quality of crystalline silicon oxide in the anode material. The third characteristic peak (925±10 cm⁻¹) is to characterize the Si-O vibration peak of amorphous silicon oxide, reflecting the thickness and content of the unstable silicon oxide layer on surface of silicon particles in the anode material. Controlling the peak intensity M2 of the second characteristic peak to be higher than the peak intensity M3 of the third characteristic peak reduces the activity of oxygen element in the silicon-based material, decreases side reactions (forming irreversible lithium silicate) caused by the contact between silicon oxide in the anode material and the electrolyte, and improves the initial coulombic efficiency of the anode material. Meanwhile, controlling the oxygen protection degree Q of the silicon-based material between 1.5 and 4.5, i.e., adjusting the oxidation degree of particle surface of the silicon-based material, so as to control it within a reasonable range, not only reduce the occurrence of side reactions between the anode material and the electrolyte, but also enable the formation of an appropriate amount of oxide on surface of the silicon-based material as a rigid protective layer, alleviating the volume expansion of the silicon-based material, thereby improving the specific capacity and cycling performance of the battery prepared by the anode material. When the Q value is less than 1, the content of the oxide layer on surface of the silicon-based material is relatively high, leading to decreased specific capacity and initial efficiency of the battery prepared by the anode material, which does not meet application requirements. When the Q value is greater than 4.5, the oxide layer on surface of the silicon-based material is relatively thin, failing to effectively reduce side reactions caused by the contact between the silicon-based material and the electrolyte, reducing the ability to alleviate the volume expansion of the silicon-based material, thereby leading to poor cycle life of the battery prepared by the anode material.

In some embodiments, the Q may be 1.5, 2.0, 2.5, 3.0, 3.35, 3.5, 4.0, 4.5, or any value within a range defined by any two above values. For example, the value of Q may be: 1.5≤Q≤3.5, or 3.5≤Q≤4.5.

In some embodiments, the value of Q may be: 1.5≤Q≤3.35.

In some embodiments, in the anode material, at least part of the carbon-based material is distributed within the silicon-based material. A plurality of particles of the silicon-based material constitute matrix of the anode material. The silicon-based material has pores, and at least part of the carbon-based material is located within the pores of the silicon-based material, forming the pores of the anode material together with the silicon-based material. Filling the carbon-based material into the pores of the silicon-based material in this way improves the rigidity of the anode material.

In other embodiments, in the anode material, at least part of the silicon-based material is distributed within the carbon-based material. A plurality of particles of the carbon-based material constitute matrix of the anode material. The carbon-based material has pores, and at least part of the silicon-based material is located within the pores of the carbon-based material, forming the pores of the anode material together with the carbon-based material. Filling the silicon-based material into the pores of the carbon-based material in this way, on the one hand, buffers the volume expansion of the silicon-based material, and on the other hand, improves the rigidity of the anode material.

In some embodiments, the carbon-based material includes at least one of artificial graphite, natural graphite, amorphous carbon, activated carbon, mesocarbon microbead, carbon nanotube, carbon nanofiber, and graphene. The carbon-based material, selected from the above materials, functions to form a conductive network with the silicon-based material.

Reasonably designing the carbon-based material raw material for the anode material effectively inhibits the volume expansion of the anode material, reduces structure damage to the anode material during cycling, and further enhances the mechanical strength and resistance to pressure of the anode material.

In some embodiments, the anode material further includes a coating layer disposed on at least part of surface of the silicon-carbon material. The coating layer has a protection strength H of ≥85%.

A test method for the protection strength H includes: immersing a mass of m1 g of an anode material in a m1*10 g of hydrofluoric acid solution with a mass concentration of hydrofluoric acid of 20% therein, mechanically stirring for 2 h, performing solid-liquid separation, washing the residual hydrofluoric acid in the solid material with deionized water and anhydrous ethanol in sequence, and vacuum drying at 60°C to obtain a m2 g of material, where H= m2/m1×100%, and H is defined as the protection strength of the coating layer.

In some embodiments, the protection strength H of the coating layer of the anode material is ≥90%.

In some embodiments, the H may be 85%, 86%, 87%, 88%, 90%, 95%, 99%, 100%, or any value within a range defined by any two above values.

The coating uniformity and compactness of the coating layer on the silicon-based material function crucially for the performance of the silicon-based material. Poor integrity and compactness of the coating layer not only lead to direct contact between the silicon-based material and the electrolyte solution to cause severe side reactions, resulting in decreased specific capacity and initial efficiency of the entire anode material, making it unusable; but also, due to the reduced mechanical strength of the coating layer, fail to effectively alleviate the volume expansion of the silicon-based material, resulting in poor cycling performance of the battery prepared by the anode material. The anode material provided by embodiments of the present application reduces side reactions between the anode material and the electrolyte solution and improves the electrochemical performance of the anode material by controlling the ratio range of the Raman characteristic peaks of the anode material as well as increasing the protection strength of the coating layer of the anode material.

In some embodiments, the coating layer includes at least one of carbon material, metal oxide, and nitride.

In some embodiments, the coating layer includes a carbon material, and the carbon material is selected from at least one of artificial graphite, natural graphite, amorphous carbon, activated carbon, graphene, soft carbon, and hard carbon.

In some embodiments, at least part of the carbon-based material is distributed on surface of the silicon-based material and forms the coating layer. The carbon-based material and the coating layer are the same material, which simplify the preparation process for the anode material.

In some embodiments, the coating layer includes a metal oxide, and the metal oxide includes at least one of titanium oxide, aluminum oxide, lithium oxide, cobalt oxide, and vanadium oxide.

In some embodiments, the coating layer includes a nitride, and the nitride includes at least one of titanium nitride, vanadium nitride, cobalt nitride, nickel nitride, and carbon nitride.

In some embodiments, the coating layer has a thickness of 0.1 nm to 100 nm. For example, the thickness of the coating layer may be 0.1 nm, 5 nm, 10 nm, 30 nm, 50 nm, 80 nm, 100 nm, or any value within a range defined by any two above values. The coating layer reduces the solubility of the anode material, thereby reducing the gas generation caused by the reaction between the dissolved active material of the silicon-based material and the electrolyte solution. Controlling the thickness of the coating layer within the above range is conducive to maintaining the stability of the particle structure of the anode material during cycling, and reduces the exposed active material on surface of the anode material. Further, the thickness of the coating layer is 1 nm to 50 nm, and furthermore, the thickness of the coating layer is 1 nm to 20 nm, which facilitate the rapid and reversible intercalation and deintercalation of lithium ions.

In some embodiments, the coating layer is a single coating layer formed by the above single material, a coating layer formed by the above multiple materials, a multi coating layer formed by the single material, or a multi coating layer formed by the multiple materials, or the like. The layer structure of the coating layer may be selected according to actual needs. It can be appreciated that when the coating layer has a structure of multi coating layer, the density is higher.

In some embodiments, the silicon-based material includes primary particles with an average particle size of 1 nm to 20 nm. The average particle size of the primary particles of the silicon-based material may be 1 nm, 2 nm, 5 nm, 8 nm, 10 nm, 12 nm, 15 nm, 18 nm, 20 nm, or any value within a range defined by any two above values, which is not limited herein. Controlling the average particle size of the primary particles in the silicon-based material between 1 nm and 20 nm adjusts the specific surface area and electron transport path of the anode material, facilitating improvement of the electrochemical performance of the anode material.

In some embodiments, the silicon-based material includes primary particles, and the primary particle includes silicon grains with an average size of 0.5 nm to 10 nm. The average size of the silicon grains may be 0.5 nm, 0.8 nm, 1 nm, 2 nm, 3 nm, 4 nm, 5 nm, 6 nm, 8 nm, 10 nm, or any value within a range defined by any two above values, which is not limited herein. The nanoscale silicon grain with a smaller size usually have a higher specific surface area, facilitating charge transport and ion diffusion of the anode material as well as inhibition of the volume expansion, thereby improving the electrochemical performance, stability and cycle life of the anode material. Further, the average size of the silicon grains of the silicon-based material is 2 nm to10 nm.

Herein, the term "primary particle" refers to a primary structure of a single particle, and the term "secondary particle" refers to an aggregate formed by physical or chemical bonding among the primary particles, i.e., a secondary structure, and there is no intentional process for aggregating or combining the primary particles to form the secondary particle. The primary particle generally includes monocrystals and polycrystals. A grain generally refers specifically to a monocrystal.

In some embodiments, the anode material has a median particle size of 0.2 µm to 18 µm. The median particle size of the anode material may be 0.2 µm, 0.5 µm, 1 µm, 2 µm, 4 µm, 5 µm, 8 µm, 10 µm, 15 µm, 18 µm, or any value within a range defined by any two above values, which is not limited herein. The median particle size of the anode material directly affects the specific surface area and electron transport path of the anode material. A smaller particle size usually means a larger specific surface area, which is conducive to the progress of electrochemical reactions and the rapid charge transport, thereby improving the power density and energy density of the battery. Moreover, the smaller particle size reduces the volume change of the material during lithium-ion intercalation/deintercalation cycling, which facilitates reduction of the structural stress and deformation, thereby extending the cycle life of the battery. Further, the median particle size of the anode material is 1 µm to 10 µm.

In some embodiments, the anode material has a specific surface area of 0.8 m²/g to 25 m²/g. The specific surface area of the anode material may be 0.8 m²/g, 1 m²/g, 2 m²/g, 3 m²/g, 5 m²/g, 8 m²/g, 10 m²/g, 15 m²/g, 20 m²/g, 25 m²/g, or any value within a range defined by any two above values, which is not limited herein. Within the above ranges, it is conducive to the progress of electrochemical reactions and the rapid charge transport in the battery prepared by the anode material, thereby improving the electrochemical performance of the anode material. Further, the specific surface area of the anode material is 2 m²/g to 10 m²/g.

In some embodiments, the anode material has a powder compaction density of 0.8 g/cm³ to 1.5 g/cm³. The powder compaction density of the anode material may be 0.8 g/cm³, 0.9 g/cm³, 1.0 g/cm³, 1.1 g/cm³, 1.2 g/cm³, 1.3 g/cm³, 1.4 g/cm³, 1.5 g/cm³, or any value within a range defined by any two above values, which is not limited herein. Within the above compaction density range, the anode material has a suitable charge transfer rate and electrolyte contact area, and also has suitable and good structure stability. Further, the powder compaction density of the anode material is 1 g/cm³ to 1.2 g/cm³.

In some embodiments, based on mass of the anode material, carbon element in the anode material accounts for a mass content of 15% to 65% by mass percentage. The mass content of carbon element in the anode material may be 15%, 20%, 25%, 30%, 35%, 40%, 45%, 50%, 55%, 60%, 65%, or any value within a range defined by any two above values, which is not limited herein. Within the above range, by adjusting the carbon content, the electrochemical performance and structure stability of the anode material are optimized. Further, the content of carbon element in the anode material is 20% to 60%.

In some embodiments, based on mass of the anode material, oxygen element in the anode material accounts for a mass content of ≤10% by mass percentage. The mass content of oxygen element in the anode material may be 1%, 2%, 3%, 4%, 5%, 6%, 7%, 8%, or any value within a range defined by any two above values.

In some embodiments, the anode material has pores. The pores of the anode material have an average pore size of 0.5 nm to 50 nm. The average pore diameter of the pores may be 0.5 nm, 1 nm, 2 nm, 5 nm, 10 nm, 15 nm, 20 nm, 25 nm, 30 nm, 40 nm, 50 nm, or any value within a range defined by any two above values. If the average pore size of the anode material is too large, the electrolyte solution easily penetrates into particles of the anode material during the charging and discharging of the battery prepared by the anode material, resulting in increased side reactions between the anode material and the electrolyte solution. Moreover, as large pores are sites of internal stress concentration in the anode material, an excessively large average pore size of the anode material tends to cause problems such as cracking, pulverization of particles of the anode material during the lithium deintercalation/intercalation, resulting in rapid decay of the cycling performance of the battery prepared by the anode material.

In some embodiments, the anode material has pores. The pores of the anode material has a porosity of 0.5% to 15%. The porosity of the anode material may be 0.5%, 1%, 2%, 3%, 5%, 8%, 10%, 15%, or any value within a range defined by any two above values. If the porosity is too large (greater than 15%), the structure of the anode material will be too loose, while if the porosity is too small (less than 0.5%), the anode material will be unable to effectively alleviate the volume expansion of the silicon material, resulting in bursting and pulverization. The battery prepared by the anode material will occur significant volume changes due to the loose structure or particle pulverization of the anode material during cycling, resulting in capacity fading. Controlling the porosity within the range of 0.5% to15% effectively extends the service life and cycle stability of the battery prepared by the anode material. Limiting the range of the porosity also adjusts the specific surface area and ion diffusion path of the anode material, facilitating improvement of the electron transport rate and ion diffusion rate of the anode material, thereby enhancing the charge-discharge efficiency of the battery prepared by the anode material.

In a second aspect, embodiments of the present application provide a preparation method for the anode material, including the following steps:
Step S1: subjecting a silicon monoxide raw material to a primary high-temperature heating to obtain a first product.

Specifically, placing the silicon monoxide raw material into a reaction device (such as an atmosphere furnace), subjecting to the primary high-temperature heating under a protective atmosphere, to obtain the first product. The main purpose of subjecting the first material to the primary high-temperature heating is to pretreat the silicon monoxide raw material to promote the pyrolysis and crystallization of the silicon monoxide, so as to stabilize the structure of the first product for subsequent chemical reactions and composite steps, ensuring the first product to have a certain crystal structure and chemical activity.

In some embodiments, the silicon monoxide raw material has a median particle size D50 of 0.1 µm to 18 µm, which, for example, may be 0.1 µm, 5 µm, 8 µm, 10 µm, 12 µm, 15 µm, or 18 µm. Within the above defined range, it helps to ensure the uniformity and consistency of the silicon monoxide raw material during heat treatment and chemical reaction. In addition, the smaller particle size facilitates improvement of the specific capacity of the battery and reduction of the volume expansion of the anode material. Further, the median particle size D50 of the silicon monoxide raw material is 2 µm to 15 µm. A particle size test method for the silicon monoxide raw material is a particle size distribution testing through a laser diffraction method by using a Malvern laser particle size analyzer (Mastersizer 3000), then a volume-based cumulative particle size distribution is measured, where D50 represents the particle size corresponding to a cumulative particle size distribution percentage reaching 50%.

In some embodiments, the primary sintering is performed by heating to a primary sintering temperature of 550°C to 1250°C at a heating rate of 1°C/min to 20°C/min and maintaining the temperature for 3 h to 12 h. Exemplarily, it may be 550°C, 600°C, 700°C, 800°C, 850°C, 900°C, 950°C, 1000°C, 1250°C,etc., or other value within the above ranges, which is not limited herein. The appropriate heating rate, sintering temperature, and holding time are contribute to pretreat the silicon monoxide raw material to form a certain crystal structure, providing a basis for the subsequent reaction with a metal reducing agent.

In some embodiments, the protective atmosphere for the primary high-temperature heating is at least one of argon, nitrogen, or helium.

Step S2, mixing the first product with a metal reducing agent in a certain ratio and subjecting to a secondary sintering to obtain a second product.

Specifically, mixing uniformly the first product and the metal reducing agent in a certain proportion, placing into a reaction device (such as a reaction furnace) with introducing a protective gas to displace the air, subjecting to the secondary sintering, and cooling, to obtain the second product. The addition of the metal reducing agent is to chemically react with the first product. For example, the first product formed by using silicon monoxide as the first material reacts with the metal reducing agent to form a silicon-metal compound or a silicon-metal alloy. The secondary sintering also helps to ensure the uniformity and stability of the anode material.

In some embodiments, the metal reducing agent includes at least one of magnesium powder, aluminum powder, and lithium powder. The above metal reducing agents all possess good reducibility, which is conducive to the reduction and alloying of the first product. Meanwhile, the introduction of the metal reducing agent also facilitates improvement of the electrical conductivity, ion diffusion performance, and cycle stability of the anode material.

In some embodiments, a mass ratio of the first product and the metal reducing agent is 1:(0.2 to 1.2), which, for example, may be 1:0.2, 1:0.3, 1:0.4, 1:0.5, 1:0.6, 1:0.7, 1:0.8, 1:0.9, 1:1, 1:1.1, or 1:1.2, and further may be 1:(0.2 to 0.8). A suitable ratio promotes a favorable reaction between the first product and the metal reducing agent.

In some embodiments, the secondary sintering is performed by heating to a secondary sintering temperature of 250°C to 850°C at a heating rate of 1°C/min to 20°C/min and maintaining the temperature for 1 h to 24 h. The temperature may further be 250°C, 350°C, 400°C, 500°C, 600°C, 700°C, 800°C, or 850°C. The secondary sintering temperature may further be 300°C to 600°C, or any other value within the above range, which is not limited herein. The appropriate heating rate, sintering temperature, and holding time provide adequate temperature and duration for the reaction, facilitating the reaction between the first product and the metal reducing agent, and improving the crystallinity and crystal structure stability of the second product.

Step S3: etching the second product for purification by an etching solution remove by-products, to obtain a silicon-based material precursor.

It may be appreciated that obtaining primary particles with pores, i.e., the silicon-based material precursor, through etching facilitates the subsequent entry of carbon matrix material into the pores of the primary particles. Compared with primary particles without pores, the primary particles of this embodiment alleviate the volume expansion of the silicon-based material itself. The anode material prepared by the preparation method of embodiments of the present application has better expansion performance.

In some embodiments, a mass ratio of the second product and the etching solution is 1:(5 to 20), which may specifically be, for example, 1:5, 1:8, 1:10, 1:15, 1:18, or 1:20, or any other value within the above range, which is not limited herein.

In some embodiments, the etching solution includes at least one of hydrochloric acid, nitric acid, sulfuric acid, hydrofluoric acid, and ammonium bifluoride.

In some embodiments, the etching solution has a molar concentration of 1 mol/L to 10 mol/L.

In some embodiments, the etching has a duration of 0.5 h to 10 h, which may specifically be, for example, 0.5 h, 1 h, 2 h, 4 h, 6 h, 8 h, 9 h, 10 h, or a range defined by any two of these values, which is not limited herein.

In some embodiments, the etching has a temperature of ≤30°C, which may specifically be, for example, 30°C, 28°C, 25°C, 20°C, 15°C, or a range defined by any two of these values, or other value within the above range, which is not limited herein.

In some embodiments, the method further includes washing and drying a product obtained by the etching, where the drying has a temperature of ≤85°C.

In some embodiments, oxygen element in the silicon-based material precursor accounts for a mass content of <6%, which may specifically be, for example, 5.9%, 4.9%, 4.5%, 4%, 3.5%, 3%, 2.5%, 2%, 1.5%, 1%, or a range defined by any two of these values, or other value within the above range, which is not limited herein.

In some embodiments, water in the silicon-based material precursor accounts for a mass content of <1.5%, which may specifically be, for example, 1.49%, 0.99%, 0.9%, 0.8%, 0.6%, 0.5%, 0.4%, 0.3%, 0.2%, 0.1%, or a range defined by any two of these values, or other value within the above range, which is not limited herein.

In some embodiments, the silicon-based material precursor has a median particle size of 0.1 µm to 15 µm.

In some embodiments, the silicon-based material precursor has a silicon grain size of 0.2 nm to 16 nm.

In some embodiments, the silicon-based material precursor has a porosity of 25% to 65%.

In some embodiments, the silicon-based material precursor has a specific surface area of 250 m²/g to 650 m²/g.

In some embodiments, the silicon-based material precursor has an average pore volume of 0.24 cm³/g to 0.66 cm³/g.

Step S4: depositing a carbon-based material and reserving pores inside the silicon-based material precursor through pulsed chemical vapor deposition, to obtain a silicon-carbon composite material.

In some embodiments, the process of depositing a carbon-based material and reserving pores inside the silicon-based material precursor through pulsed chemical vapor deposition includes specifically: placing the silicon-based material precursor into a reaction furnace with introducing an inert gas to displace the air therein, heating to a certain temperature, feeding gaseous carbon source in a pulse way, varying deposition rate and efficiency of the carbon-based material therein by controlling gas amount in a short-term, and continuously depositing carbon therein by continuously introducing the carbon source, maintaining the temperature for a certain period for a thermal cracking reaction of the carbon source to enable the carbon-based material to be deposited inside the silicon-based material precursor and to allow reserving pores therein, to obtain the silicon-carbon composite material.

The carbon vapor deposition by the pulsed chemical vapor deposition has a heating rate of 1°C/min to 30°C/min. The carbon vapor deposition by the pulsed chemical vapor deposition has a reaction temperature of 200°C to 1050°C. The carbon vapor deposition by the pulsed chemical vapor deposition has a holding time of 1 h to 24 h. The gaseous carbon source in the pulsed chemical vapor deposition includes at least one of acetylene, methane, ethylene, propane, toluene, cyclohexane, ethanol, ethylene, propylene, pyrrole, and acetonitrile. The carbon vapor deposition by the pulsed chemical vapor deposition has a flow rate of 0.1 L/min to 10 L/min. The pulse has a frequency of 10 Hz to 500 Hz. The pulse has a single duration of 10 ms to 800 ms. The pulse has a total duration of 1 h to 8 h.

Step S5, surface-coating the silicon-carbon composite material with a coating material, where the coating material includes at least one of a carbon material, a metal oxide layer, and a nitride.

In some embodiments, coating a dense coating layer on surface of the silicon-carbon composite material through a fluidized bed chemical vapor deposition, which, taking a carbon coating layer as an example, specifically includes: placing the silicon-carbon composite material into a vertical fluidized bed device with introducing an inert gas or nitrogen to displace the air therein, heating to a certain temperature, and then introducing an inert gas or nitrogen as a motive gas for the material to keep the material in a fluidized state; introducing a certain flow rate of a gaseous carbon source and holding temperature for a certain period of time for a thermal cracking reaction of the carbon source, enabling deposition of a dense carbon layer on surface of the silicon-carbon composite material, to obtain the anode material.

In some embodiments, the inert gas includes one or more of helium, neon, argon, and krypton.

The carbon vapor deposition by fluidized bed chemical vapor deposition has a heating rate of 1°C/min to 20°C/min. The motive gas used for the carbon vapor deposition by fluidized bed chemical vapor deposition has a flow rate of 1.5 L/min to 25 L/min. The carbon vapor deposition by fluidized bed chemical vapor deposition has a reaction temperature of 600°C to 1150°C. The carbon vapor deposition by fluidized bed chemical vapor deposition has a holding time of 0.5 h to 24 h. The gaseous carbon source in the fluidized bed chemical vapor deposition includes at least one of acetylene, methane, ethylene, propane, toluene, cyclohexane, ethanol, ethylene, propylene, and liquefied petroleum gas. The gaseous carbon source in the fluidized bed chemical vapor deposition has a flow rate of 0.5 L/min to 15 L/min.

The silicon oxide in the first product is reduced to elemental silicon by reacting the first product with the metal reducing agent, thereby controlling the intensity of the first characteristic peak. Oxygen element on surface of the silicon-based material is removed by using the etching solution through etching to control the intensities of the second characteristic peak and the third characteristic peak, thereby modulating the oxygen protection degree of the silicon-based material. In addition, the carbon-based material is deposited and the pores are reserved inside the silicon-based material precursor through pulsed chemical vapor deposition, and a dense carbon layer is further coated the surface thereof through fluidized bed chemical vapor deposition, to finally form the anode material.

By adopting pulsed gas-feeding, the deposition rate of the carbon source inside the material is precisely controlled, enabling the material to deposit the carbon-based material therein and to reserve part of the pores, thereby modulating the porosity of the anode material, which is conducive to alleviating the volume expansion of the silicon-based material. In addition, adopting fluidized bed chemical vapor deposition to further uniformly coat the material surface enables the formation of a dense coating layer on the material surface, which effectively reduces the direct penetration of the electrolyte solution into particles of the anode material through the pore structure, and reduces the side reactions caused by contact between the electrolyte solution and the silicon-based material, and improves the cycling performance of the battery prepared by the anode material. Through the synergistic effect of pulsed carbon deposition and the coating process, internal pore reservation and dense surface coating of the anode material are achieved. The protection strength H of the coating layer of the anode material is controlled to be ≥85%, which not only reduces the expansion rate of the anode material, facilitating the formation of a stable solid electrolyte membrane on surface of the anode material, but also is contribute to improving the stability of the material, enhancing the electrochemical performance of the anode material.

In a third aspect, embodiments of the present application provide a secondary battery, including the anode material according to the first aspect or the anode material prepared by the preparation method according to the second aspect.

The secondary battery provided in the third aspect of embodiments of the present application possesses advantages such as high capacity, high initial efficiency, long cycling life, excellent rate performance, and low expansion.

### Specific Examples and Comparative Examples

### Example 1

(1) a silicon monoxide raw material was placed into an atmosphere furnace and heated to 950°C at a heating rate of 3°C/min under argon atmosphere, and the temperature was maintained for 5 h, following by cooling to obtain a first product.
(2) the first product was mixed uniformly with metallic aluminum powder in a molar ratio of 1:0.5 and placed into a reaction furnace, and protective gas was introduced to displace the air. The furnace was heated to 650°C at a heating rate of 3°C/min, and the temperature was maintained for 4 h, following by cooling to obtain a second product.
(3) the second product was placed into an etching solution for purification, with a mass ratio of the second product and the etching solution of 1:5, a concentration of the etching solution of 6 mol/L, hydrochloric acid and hydrofluoric acid included in the etching solution, an etching duration of 1.5 h, and an etching temperature controlled at 25°C; then washed and dried to obtain a silicon-based material precursor.
(4) 500g of the silicon-based material precursor was placed into a rotary atmosphere furnace, and the air therein was displaced with an inert gas. After the furnace was heated to 750°C at a heating rate of 3°C/min under argon atmosphere, the flow rate of acetylene gas was set to 2.5 L/min to feed the carbon source into the pulse generator, with setting the pulse frequency to 50 Hz, the single pulse duration to 200 ms, and the total pulse duration to 3 h. After turning off the pulse generator, the acetylene gas was continually fed at a flow rate of 2.5 L/min for 2 h, followed by cooling to obtain a silicon-carbon composite material.
(5) 1kg of the silicon-carbon composite material was placed into a vertical fluidized bed device, the air therein was replaced with an inert gas, and argon was introduced as a motive gas at 3 L/min. After the device was heated to 750°C at a heating rate of 3°C/min, propane was introduced as a carbon source gas at 2 L/min. The temperature was maintained for 3 h, followed by cooling to obtain the anode material.

The physical and chemical parameters of the anode material of this Example are shown in Table 1 for detail.

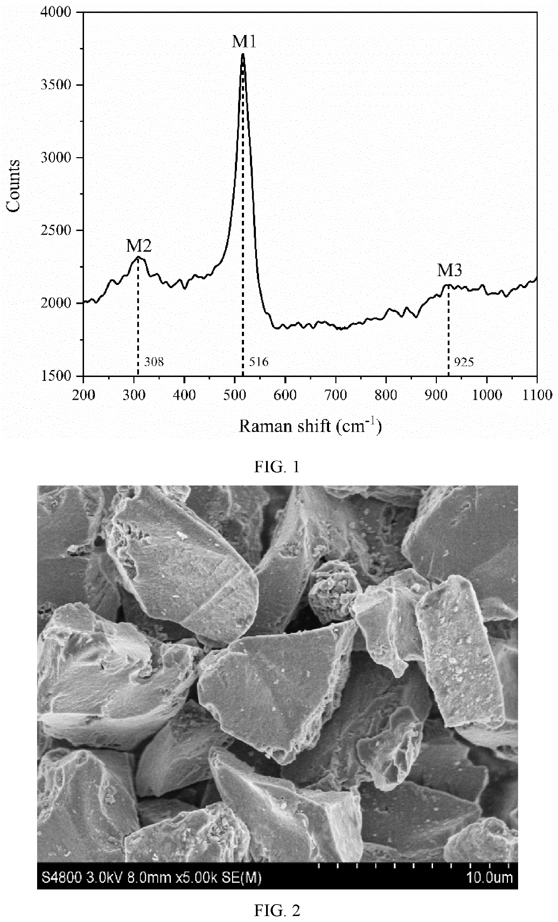

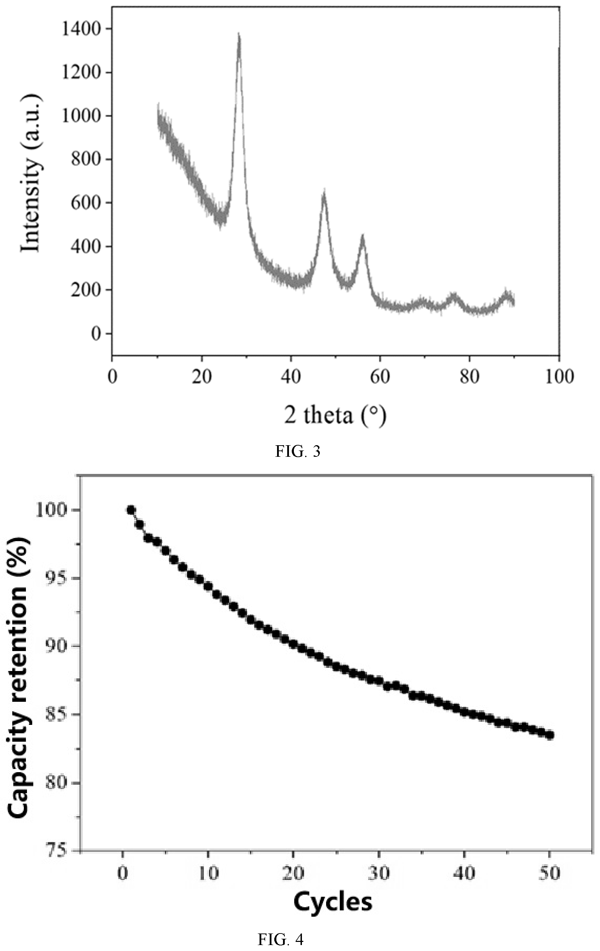

FIG. 1 is the Raman spectrum of the anode material of this Example; FIG. 2 is the scanning electron microscope image of the anode material of this Example; FIG. 3 is the XRD pattern of the anode material of this Example; and FIG. 4 is the cycling performance curve of the battery prepared by the anode material of this Example, with a charge-discharge current of 1000 mA/g.

From the Raman spectrum of FIG. 1, it can be seen that the first characteristic peak of the anode material at 516 cm⁻¹ has a peak intensity of 3716; the second characteristic peak at 308 cm⁻¹ has a peak intensity of 2315; and the first characteristic peak at 925 cm⁻¹ has a peak intensity of 2124. Thus the Q is calculated as 3.35.

From the scanning electron microscope image of FIG. 2, it can be seen that the prepared silicon-carbon anode material has a relatively smooth surface, without cracks.

From the XRD pattern of FIG. 3, it can be seen that the three strongest peaks at 28.4°, 47.3°, and 56.1° correspond to those of silicon (JCPDS No. 27-1402), with almost no impurity phases. According to the Scherrer formula, the particle size of the silicon grain is calculated as 3.5 nm.

From FIG. 4, it can be seen that the material possesses excellent cycling performance, with a capacity retention of 83.4% after 50 cycles at a current of 0.25C.

### Example 2

(1) a silicon monoxide raw material was placed into an atmosphere furnace and heated to 970°C at a heating rate of 3°C/min under argon atmosphere, and the temperature was maintained for 6 h, following by cooling to obtain a first product.
(2) the first product was mixed uniformly with metallic aluminum powder in a molar ratio of 1:0.3 and placed into a reaction furnace, and protective gas was introduced to displace the air. The furnace was heated to 650°C at a heating rate of 3°C/min, and the temperature was maintained for 4 h, following by cooling to obtain a second product.
(3) the second product was placed into an etching solution for purification, with a mass ratio of the second product and the etching solution of 1:10, a concentration of the etching solution of 3 mol/L, an etching duration of 2.5 h, and an etching temperature controlled at 25°C; then washed and dried to obtain a silicon-based material precursor.
(4) 500g of the silicon-based material precursor was placed into a rotary atmosphere furnace, and the air therein was displaced with an inert gas. After the furnace was heated to 700°C at a heating rate of 3°C/min under argon atmosphere, the flow rate of acetylene gas was set to 0.5 L/min to feed the carbon source into the pulse generator, with setting the pulse frequency to 500 Hz, the single pulse duration to 10 ms, and the total pulse duration to 8 h. After turning off the pulse generator, the acetylene gas was continually fed at a flow rate of 2.5 L/min for 1 h, followed by cooling to obtain a silicon-carbon composite material.
(5) 1kg of the silicon-carbon composite material was placed into a vertical fluidized bed device, the air therein was replaced with an inert gas, and argon was introduced as a motive gas at 4 L/min. After the device was heated to 650°C at a heating rate of 5°C/min, propane was introduced as a carbon source gas at 3 L/min. The temperature was maintained for 4 h, followed by cooling to obtain the anode material.

The physical and chemical parameters of the anode material of this Example are shown in Table 1 for detail.

### Example 3

(1) a silicon monoxide raw material was placed into an atmosphere furnace and heated to 970°C at a heating rate of 3°C/min under argon atmosphere, and the temperature was maintained for 6 h, following by cooling to obtain a first product.
(2) the first product was mixed uniformly with metallic aluminum powder in a molar ratio of 1:0.3 and placed into a reaction furnace, and protective gas was introduced to displace the air. The furnace was heated to 650°C at a heating rate of 3°C/min, and the temperature was maintained for 4 h, following by cooling to obtain a second product.
(3) the second product was placed into an etching solution for purification, with a mass ratio of the second product and the etching solution of 1:10, a concentration of the etching solution of 8 mol/L, an etching duration of 2.5 h, and an etching temperature controlled at 25°C; then washed and dried to obtain a silicon-based material precursor.
(4) 500g of the silicon-based material precursor was placed into a rotary atmosphere furnace, and the air therein was displaced with an inert gas. After the furnace was heated to 900°C at a heating rate of 3°C/min under argon atmosphere, the flow rate of acetylene gas was set to 9.5 L/min to feed the carbon source into the pulse generator, with setting the pulse frequency to 10 Hz, the single pulse duration to 800 ms, and the total pulse duration to 4 h. After turning off the pulse generator, the acetylene gas was continually fed at a flow rate of 1.5 L/min for 2 h, followed by cooling to obtain a silicon-carbon composite material.
(5) 1kg of the silicon-carbon composite material was placed into a vertical fluidized bed device, the air therein was replaced with an inert gas, and argon was introduced as a motive gas at 4 L/min. After the device was heated to 650°C at a heating rate of 5°C/min, propane was introduced as a carbon source gas at 3 L/min. The temperature was maintained for 4 h, followed by cooling to obtain the anode material.

The physical and chemical parameters of the silicon-carbon anode material of this Example are shown in Table 1 for detail.

### Example 4

(1) a silicon monoxide raw material was placed into an atmosphere furnace and heated to 750°C at a heating rate of 3°C/min under argon atmosphere, and the temperature was maintained for 5 h, following by cooling to obtain a first product.
(2) the first product was mixed uniformly with metallic magnesium powder in a molar ratio of 1:0.2 and placed into a reaction furnace, and protective gas was introduced to displace the air. The furnace was heated to 620°C at a heating rate of 3°C/min, and the temperature was maintained for 5 h, following by cooling to obtain a second product.
(3) the second product was placed into an etching solution for purification, with a mass ratio of the second product and the etching solution of 1:10, a concentration of the etching solution of 10 mol/L, an etching duration of 1.5 h, and an etching temperature controlled at 25°C; then washed and dried to obtain a silicon-based material precursor.
(4) 500g of the silicon-based material precursor was placed into a rotary atmosphere furnace, and the air therein was displaced with an inert gas. After the furnace was heated to 950°C at a heating rate of 3°C/min under argon atmosphere, the flow rate of acetylene gas was set to 10 L/min to feed the carbon source into the pulse generator, with setting the pulse frequency to 10 Hz, the single pulse duration to 800 ms, and the total pulse duration to 8 h. After turning off the pulse generator, the acetylene gas was continually fed at a flow rate of 0.1 L/min for 3 h, followed by cooling to obtain a silicon-carbon composite material.
(5) 1kg of the silicon-carbon composite material was placed into a vertical fluidized bed device, the air therein was replaced with an inert gas, and argon was introduced as a motive gas at 4 L/min. After the device was heated to 600°C at a heating rate of 5°C/min, propane was introduced as a carbon source gas at 1 L/min. The temperature was maintained for 2 h, followed by cooling to obtain the anode material.

The other parameters of the anode material of this Example are shown in Table 1 for detail.

### Example 5

The anode material was prepared in substantially the same manner as in Example 1, excepting that in step (1), the heating temperature was 780°C, and in step (3), the concentration of the etching solution was 1 mol/L.

### Example 6

The anode material was prepared in substantially the same manner as in Example 1, excepting that in step (3), the etching duration was 3 h.

### Example 7

The anode material was prepared in substantially the same manner as in Example 1, excepting that in step (5), the reaction temperature was 850°C.

### Example 8

The anode material was prepared in substantially the same manner as in Example 1, excepting that in step (5), the concentration of the carbon source was 8 L/min.

### Comparative Example 1

This comparative example was performed the steps (1), (2), (3), and (5) in substantially the same manner as in Example 1, excepting that in step (4), a traditional CVD was performed:.
(4) 500 g of a silicon-based material precursor was placed into a rotary atmosphere furnace, and the air therein was displaced with an inert gas. After the furnace was heated to 750°C at a heating rate of 3°C/min under an argon atmosphere, the flow rate of acetylene gas was set to 2.5 L/min, and the acetylene gas was continuously fed for 5 h, followed by cooling to obtain a silicon-carbon composite material.

The physical and chemical parameters of the anode material of this Comparative Example are shown in Table 1 for detail.

### Comparative Example 2

This comparative example was performed the steps (1), (3), (4), and (5) in substantially the same manner as in Example 1, excepting that in step (2), no metallic aluminum powder was added:
(2) the first product was placed into a reaction furnace, and protective gas was introduced to displace the air. The furnace was heated to 650°C at a heating rate of 3°C/min, and the temperature was maintained for 4 h, following by cooling to obtain a second product.

The physical and chemical parameters of the anode material of this Comparative Example are shown in Table 1 for detail.

### Comparative Example 3

This comparative example was performed the steps (1), (4), and (5) in substantially the same manner as in Example 1, excepting that in step (2), an excess amount of metallic magnesium powder was added; and in step (3), the mass ratio of the second product and the etching solution was 1:25, the concentration of the etching solution was 11 mol/L, and the etching duration was 4.5 h:
(2) the first product was mixed uniformly with metallic magnesium powder in a molar ratio of 1:3 and placed into a reaction furnace, and protective gas was introduced to displace the air. The furnace was heated to 650°C at a heating rate of 3°C/min, and the temperature was maintained for 4 h, following by cooling to obtain a second product.
(3) the second product was placed into an etching solution for purification, with a mass ratio of the second product and the etching solution of 1:25, a concentration of the etching solution of 11 mol/L, an etching duration of 4.5 h, and an etching temperature controlled at 25°C; then washed and dried to obtain a silicon-based material precursor.

The physical and chemical parameters of the anode material of this Comparative Example are shown in Table 1 for detail.

### Test methods:

### 1) Raman spectroscopy test of an anode material:

The Raman spectroscopy test is performed by using a HORIBA XPLORA laser confocal Raman spectrometer from Japan, including Raman peak position, peak intensity, full width at half maximum, and the like. Specifically, a sample is placed on the sample stage of the Raman spectrometer to align it with the laser beam. The test conditions: 532 nm laser, and a test range of 100 cm⁻¹ to 3000 cm⁻¹. A standard substance is used for zero-point calibration to ensure the precision and accuracy of the spectrum. The sample is excited by a laser to measure the frequency and intensity of the scattered light.

### 2) Test method for specific surface area of an anode material:

Test methods for specific surface area and specific pore volume: an ASAP2460 surface area and pore diameter analyzer (Micromeritics, USA) is used. At a temperature of liquid nitrogen, the equilibrium adsorption amount of nitrogen on surface of an object is related to its specific surface area and other characteristics. Combined with a regularity of the adsorption amount varying with the relative pressure during the adsorption process, various models can be fitted to calculate the specific surface area.

### 3) Test method for protection strength H of a coating layer:

A mass of m1 g of an anode material is immersed in a m1*10 g of hydrofluoric acid solution with a mass concentration of hydrofluoric acid of 20% therein, and mechanically stirred for 2 h. Then, a solid-liquid separation is performed, the residual hydrofluoric acid in the solid material is washed with deionized water and anhydrous ethanol in sequence, and a m2 g of material is obtained by vacuum drying at 60°C for 12 h. The protection strength H of the coating layer is calculated as H= m2/m1×100%.

### 4) The particle size of an anode material:

The particle size test method is performed in accordance with GB/T 19077-2016. The D50 is measured through the laser diffraction method by using a Malvern laser particle size analyzer (Mastersizer 3000), which exhibits a symmetric distribution similar to a normal distribution. In its volume-based distribution, the 50% cumulative particle size is D50; by analogy, the 90% cumulative particle size is D90, and the 10% cumulative particle size is D10. An exemplary laser particle size analyzer is the Mastersizer 3000 laser particle size analyzer from Malvern Instruments Ltd., UK.

### 5) Test method for compaction density:

By using a CARVER 4350.22 powder compaction density tester (Carver, USA), a specified mass m of sample is placed into a mold and subjected to a pressure of 1.0 T for 30 s, and then released to measure its thickness, to calculate the compaction density.

### 6) Test methods for oxygen element content and carbon element content in an anode material:

The mass content of oxygen element is measured by using a Fourier transform infrared spectrometer. The mass content of carbon element is measured through the thermogravimetric analysis.

### 7) SEM test:

The scanning electron microscope characterization is performed by a transmission electron microscope with an operating voltage of 200kV to observe the structure of the anode material and to calibrate the thickness of the coating layer. Exemplarily, the thickness of the coating layer: the material is cross-cut by using a FIB-SEM equipment, 10 particles are randomly selected in the SEM image, and each particles are measured 3 times for the thickness of the coating layer, to obtain the average thickness of the coating layer.

### 8) Test method for average size of primary particles :

The material is cross-cut by using a FIB-SEM equipment, and the sizes of 20 primary particles are measured by SEM, and an average value of which is calculated as the average size of the primary particles.

### 9) Test method for average size of silicon grains:

The XRD pattern of the sample is measured by an X-ray diffractometer, and the full width at half maximum of the diffraction peaks and the corresponding Bragg angles of the sample are obtained by Jade software, thus the average size of the silicon grains is calculated by the Scherrer formula D=Kγ/B cosθ.

### 10) Porosity test method:

A mercury intrusion porosimetry is used, which is a method for calculating porosity by measuring the pressure change of mercury in pores of a material. This method uses an AutoPore IV 9500 high-performance fully automatic mercury porosimeter (Micromeritics Instrument Corporation, USA) to force mercury into the pores of the material, and the porosity and pore distribution are calculated based on the volume change and pressure change of the mercury.

### 11) Test method for the average pore size of an anode material:

The test is performed by using an ASAP2460 device (Micromeritics, USA), where the pore volume V is calculated by using the BJH Desorption cumulative volume of pores model within the pore size range of 17Å to 3000Å.

The Micromeritics ASAP 2460 is used for micropore and mesopore analysis. ASAP2460 surface area and pore diameter analyzer (Micromeritics, USA) is used. At a temperature of liquid nitrogen, the equilibrium adsorption amount of nitrogen on surface of an object is related to its pore size and other characteristics. Combined with a regularity of the adsorption amount varying with the relative pressure during the adsorption process, various models can be fitted to calculate the pore size. The report generated by the software uses the Density Functional Theory (abbreviated as DFT) method to calculate the pore size distribution.

Through the above tests, the performance parameters of the anode materials prepared by Examples 1-8 and Comparative Examples 1-3, labeled as S1-S8 and R1-R3, respectively, are shown in Table 1:

**Table 1**

| Performance parameters | S1 | S2 | S3 | S4 | S5 | S6 | S7 | S8 | R1 | R2 | R3 |
|---|---|---|---|---|---|---|---|---|---|---|---|
| M1 | 3716 | 3288 | 3458 | 3194 | 2470 | 2958 | 3521 | 3492 | 3467 | 1933 | 4108 |
| M2 | 2315 | 2252 | 2451 | 2189 | 3532 | 2089 | 2555 | 2478 | 2488 | 2655 | 1985 |
| M3 | 2124 | 2108 | 1119 | 1958 | 3087 | 1740 | 1987 | 2054 | 2037 | 3379 | 1617 |
| Q | 3.35 | 3.02 | 4.50 | 3.09 | 1.50 | 3.12 | 3.15 | 3.11 | 3.10 | 1.31 | 4.61 |
| H (%) | 92 | 90 | 89 | 85 | 91 | 88 | 93 | 93.2 | 80 | 87 | 86 |
| Average size of silicon grains (nm) | 3.5 | 3.8 | 10 | 0.5 | 1.5 | 3.5 | 3.7 | 3.7 | 3.5 | 3.6 | 6.8 |
| Average particle size of primary particles of the silicon-based material (nm) | 10 | 12 | 20 | 1 | 5 | 10 | 10 | 10 | 10 | 12 | 18 |
| Median particle size of the anode material (D50, µm) | 5 | 5.2 | 5.2 | 5 | 5 | 5 | 5 | 5 | 5.5 | 6.0 | 4.5 |
| Specific surface area (m²/g) | 5 | 1.5 | 14 | 8 | 6 | 4 | 7 | 3.5 | 15 | 20 | 25 |
| Compaction density (g/cm³) | 1.2 | 1.1 | 0.85 | 0.8 | 1.1 | 1.25 | 1.0 | 1.4 | 0.77 | 0.99 | 0.68 |
| Oxygen content (%) | 5 | 4 | 2 | 5 | 8 | 3 | 2.5 | 2.9 | 3 | 6.9 | 1.2 |
| Carbon content (%) | 33 | 35 | 45 | 25 | 30 | 39 | 38 | 42 | 32 | 32 | 33 |
| Porosity (%) | 2 | 5 | 0.9 | 0.6 | 2.3 | 3.5 | 2.1 | 2.2 | 12 | 6.3 | 15 |

### 8) Electrochemical Testing:

An anode material is mixed with sodium carboxymethyl cellulose, styrenebutadiene rubber, conductive graphite (KS-6), and carbon black (SP) in a mass ratio of 92:2:2:2:2 to prepare a slurry, which is uniformly coated onto a copper foil and dried to form an anode plate. The anode plate is then assembled into a button battery in a glove box filled with argon, by using a polypropylene microporous membrane as the separator, 1 mol/L lithium hexafluorophosphate (with a solvent of mixture of ethylene carbonate, ethyl methyl carbonate, and dimethyl carbonate) as the electrolyte, and a lithium metal sheet as the counter electrode plate.

The above 12 batteries were tested on a Land CT2001A Battery Test System for the discharge specific capacity, where the discharge specific capacity is defined as the ratio of the discharge capacity for 1h to the battery capacity.

The above 12 batteries were tested on a Land CT2001A Battery Test System for the initial coulombic efficiency, with a charge-discharge current of 0.05C, to obtain the initial coulombic efficiencies.

The above 12 batteries were tested on a Land CT2001A Battery Test System for the battery capacity after 50 cycles and the capacity retention after 50 cycles, with a charge-discharge current of 0.25C.

The capacity retention after 50 cycles at 0.25C = the discharge capacity at 50th cycle / the discharge capacity at 1st cycle * 100%. The results are shown in Table 2.

**Table 2 Comparison table of performance parameters for each batteries**

| Sample | Discharge specific capacity (mAh/g) | Initial coulombic efficiency (%) | Capacity retention after 50 cycles at 0.25C (%) | Electrode film expansion rate (%) |
|---|---|---|---|---|
| S1 | 2592 | 90.6 | 83.4 | 23.5 |
| S2 | 2313 | 87.4 | 81.3 | 24.6 |
| S3 | 2554 | 89.6 | 76.4 | 26.5 |
| S4 | 2534 | 88.0 | 78.5 | 24.4 |
| S5 | 2581 | 86.6 | 75.7 | 24.2 |
| S6 | 2456 | 89.8 | 74.4 | 21.4 |
| S7 | 2283 | 90.3 | 81.6 | 24.6 |
| S8 | 2282 | 89.9 | 81.8 | 24.5 |
| R1 | 2568 | 85.5 | 70.5 | 24.1 |
| R2 | 2185 | 82.5 | 81.6 | 24.5 |
| R3 | 2590 | 90.5 | 61.2 | 39.6 |

From the results shown in Tables 1 and 2, for ensuring the balance between the specific capacity and cycle life of the anode material, the oxidation degree on surface of the silicon particle is modulated through controlling synthesis process, keeping the oxygen protection degree Q of the silicon-based material between 1.5 and 4.5. Within this reasonable range, it not only reduces the occurrence of side reactions between the anode material and the electrolyte, but also enables the formation of an appropriate amount of oxide on surface of the silicon-based material as a rigid protective layer, alleviating the volume expansion of the silicon-based material, thereby improving the cycling performance of the battery prepared by the anode material. In the present application, by the synergistic effect of the deposition process and coating process of the carbon-based material, the protection strength H of the coating layer of the anode material is controlled to be ≥85%, which reduces the infiltration of the electrolyte into the active material such as the silicon-based material in the anode material, improving the capacity and initial coulombic efficiency of the battery prepared by the anode material, as well as alleviates the volume expansion of the silicon-based material, improving the cycling and rate performance of the battery prepared by the anode material.

Compared with Example 1, Example 2 reduced the amount of the metal reducing agent during the preparation process, resulting in a decreased intensity of the first characteristic peak of the anode material, which lowers the oxygen protection degree Q of the silicon-based material, thereby leading to a decreased capacity retention during cycling and an increased volume expansion of the composite material in Example 2. Compared with Example 1, Example 4 lowered the coating temperature during the vertical fluidized bed carbon coating process, resulting in a reduced coating effect and a reduced carbon content in the anode material. That is, the coating layer of the anode material has a thinner thickness, a smaller mass proportion, and thus a decreased protection strength, leading to a decreasd initial coulombic efficiency of the battery prepared by the anode material.

Compared with Example 2, Example 3 increased the concentration of the etching solution during the preparation process, resulting in a significant decreased intensity of the third characteristic peak and a thinner oxide layer on the surface of the silicon-based material, which thereby leads to an increased oxygen protection degree Q of the silicon-based material of the anode material in Example 3, and thereby results in an increased specific capacity and an improved initial coulombic efficiency of the anode material of Example 3.

Compared with Example 1, Example 5 reduced the concentration of the etching solution. On one hand, it is difficult to effectively remove oxide by-products generated during the reduction process, resulting in a decreased intensity of the first characteristic peak. On the other hand, the amorphous oxides on the surface of the silicon-based material is preferentially etched due to the reduced concentration, resulting in a decreased intensity of the second characteristic peak. Thereby, the oxygen protection degree Q of the silicon-based material decreases, and the capacity retention during cycling and the initial coulombic efficiency decrease.

Compared with Example 1, Example 6 extended the etching duration of the etching solution, resulting in an increased porosity of the anode material. Under the same carbon deposition conditions, its carbon coating effect is poor, resulting in a decreased protection strength of the coating layer and a deteriorated cycling performance of the material. However, because there are sufficient pores reserved in the anode material, the volume expansion of the silicon-based material in the anode material is effectively alleviated, thus the volume expansion rate of the anode material decreases.

Compared with Example 1, Examples 7 and 8 increased the reaction temperature and the carbon source concentration in step (5) during the preparation process, respectively, resulting in a significantly improved carbon coating efficiency, increasing carbon content and density, thereby increasing the protection strength H of the coating layer, but decreasing the specific capacity of the anode material. Due to the increased temperature and concentration during the coating process, the carbon source concentration increases. Since cracking the carbon source is an exothermic reaction, the increased carbon source concentration leads to a rised local temperature, and also leads to increased particle size of the silicon grains, resulting in deteriorated cycling performance and expansion performance.

Compared with Example 1, Comparative Example 1 used the traditional CVD instead of the pulsed chemical vapor deposition during the preparation process, resulting in low filling efficiency of the carbon-based material within the silicon-based material, and increased porosity and specific surface area of the obtained anode material. Under the same coating conditions, the protection strength H of the coating layer decreases, the cycling performance and expansion performance of the battery prepared by the anode material became worse, and the initial coulombic efficiency decreases significantly.

Compared with Example 1, Comparative Example 2 did not add metallic aluminum powder in step (2) during the preparation process, resulting in a significantly decreased intensity of the first characteristic peak and an increased intensity of the third characteristic peak, thereby resulting in less than 1.5 of the oxygen protection degree Q of the silicon-based material. Thus, the specific capacity of the battery prepared by the anode material decreases, which cannot meet the application requirements.

Compared to Example 1, Comparative Example 3 used an excess amount of metal reducing agent and the etching solution with significantly increased content and concentration during the preparation process, thereby resulting in greater than 4.5 of the oxygen protection degree Q of the silicon-based material. Both the specific capacity and initial efficiency of the obtained anode material increase significantly, but the oxide layer on the surface of the silicon-based material is too thin to effectively reduce side reactions caused by contact between the silicon-based material and the electrolyte and to effectively alleviate the volume expansion of the silicon-based material, resulting in a poor cycle life of battery prepared by the anode material.

In summary, the anode material of the present application has the advantages such as low expansion and excellent cycle stability.

The embodiments of the present application have been described in detail above, and specific examples have been used herein to illustrate the principles and implementation modes of the present application. The description of the above embodiments is only intended to help understand the method of the present application and its core ideas. At the same time, any changes or modifications made by those skilled in the art based on the ideas of the present application, within the specific implementation modes and scope of application of the present application, shall fall within the protection scope of the present application. In summary, the content of this specification should not be construed as a limitation on the present application.

## Claims

1. An anode material, **characterized in that** the anode material comprises a silicon-carbon material, wherein the silicon-carbon material comprises a silicon-based material and a carbon-based material, and at least part of the carbon-based material is distributed within the silicon-based material; and
wherein by testing the anode material through a Raman spectroscopy, the anode material has a first characteristic peak at 515±10 cm⁻¹ with a peak intensity represented as M1, a second characteristic peak at 305±10 cm⁻¹ with a peak intensity represented as M2, and a third characteristic peak at 925±10 cm⁻¹ with a peak intensity represented as M3, the silicon-based material has an oxygen protection degree represented as Q, and Q, M1, M2, and M3 of the anode material satisfy relationships as follow: Q=M1/M2+M1/M3, 1.5≤Q≤4.5, and M2>M3.

2. The anode material according to claim 1, **characterized in that** the Q satisfies one of the following:
the Q satisfies 1.5≤Q≤3.35; or
the Q satisfies 3.35≤Q≤4.5; or
the Q is 1.5, 2.0, 2.5, 3.0, 3.35, 3.5, 4.0, 4.5, or any value within a range defined by any two above values.

3. The anode material according to claim 1, **characterized in that** the carbon-based material comprises at least one of artificial graphite, natural graphite, amorphous carbon, activated carbon, mesocarbon microbead, carbon nanotube, carbon nanofiber, and graphene.

4. The anode material according to claim 1, **characterized in that** the anode material further comprises a coating layer disposed on at least part of surface of the silicon-carbon material, wherein the coating layer has a protection strength represented as H; wherein a test method for the protection strength H comprises: immersing a mass of m1 g of an anode material in a m1*10 g of hydrofluoric acid solution with a mass concentration of hydrofluoric acid of 20% therein, mechanically stirring for 2 h, performing solid-liquid separation, washing the residual hydrofluoric acid in the solid material with deionized water and anhydrous ethanol in sequence, and vacuum drying at 60°C to obtain a m2 g of material, wherein H= m2/m1×100%; and
wherein the protection strength H of the coating layer satisfies one of the following:
the protection strength H of the coating layer is ≥85%; or
the protection strength H of the coating layer is ≥90%; or
the protection strength H of the coating layer is 85%, 86%, 87%, 88%, 90%, 95%, 99%, 100%, or any value within a range defined by any two above values.

5. The anode material according to claim 4, **characterized in that** the coating layer satisfies at least one of the following:
a, the coating layer comprises at least one of a carbon material, a metal oxide, and a nitride;
b, the coating layer comprises a carbon material, and the carbon material comprises at least one of artificial graphite, natural graphite, amorphous carbon, activated carbon, graphene, soft carbon, and hard carbon;
c, at least part of the carbon-based material is distributed on surface of the silicon-based material and forms the coating layer;
d, the coating layer comprises a metal oxide, and the metal oxide comprises at least one of titanium oxide, aluminum oxide, lithium oxide, cobalt oxide, and vanadium oxide; and
e, the coating layer comprises a nitride, and the nitride comprises at least one of titanium nitride, vanadium nitride, cobalt nitride, nickel nitride, and carbon nitride.

6. The anode material according to claim 4, **characterized in that** the coating layer satisfies one of the following:
the coating layer has a thickness of 0.1 nm to 100 nm; or
the coating layer has a thickness of 1 nm to 50 nm; or
the coating layer has a thickness of 1 nm to 20 nm; or
the coating layer has a thickness of 0.1 nm, 5 nm, 10 nm, 30 nm, 50 nm, 80 nm, 100 nm, or any value within a range defined by any two above values.

7. The anode material according to claim 1, **characterized in that** the silicon-based material comprises primary particles, and the primary particles satisfy one of the following:
the primary particles have an average particle size of 1 nm to 20 nm; or
the primary particles have an average particle size of 1 nm, 2 nm, 5 nm, 8 nm, 10 nm, 12 nm, 15 nm, 18 nm, 20 nm, or any value within a range defined by any two above values.

8. The anode material according to claim 7, **characterized in that** the primary particles comprise silicon grains, and the silicon grains satisfy one of the following:
the silicon grains have an average size of 0.5 nm to 10 nm; or
the silicon grains have an average size of 2 nm to 10 nm; or
the silicon grains have an average size of 0.5 nm, 0.8 nm, 1 nm, 2 nm, 3 nm, 4 nm, 5 nm, 6 nm, 8 nm, 10 nm, or any value within a range defined by any two above values.

9. The anode material according to claim 1, **characterized in that** the anode material satisfies one of the following:
the anode material has pores, and the pores of the anode material have an average pore size of 0.5 nm to 50 nm; or
the pores of the anode material have an average pore size of 0.5 nm, 1 nm, 2 nm, 5 nm, 10 nm, 15 nm, 20 nm, 25 nm, 30 nm, 40 nm, 50 nm, or any value within a range defined by any two above values.

10. The anode material according to claim 1, **characterized in that** the anode material satisfies one of the following:
the anode material has a median particle size of 0.2 µm to 18 µm; or
the anode material has a median particle size of 1 µm to 18 µm; or
the anode material has a median particle size of 0.2 µm, 0.5 µm, 1 µm, 2 µm, 4 µm, 5 µm, 8 µm, 10 µm, 15 µm, 18 µm, or any value within a range defined by any two above values.

11. The anode material according to claim 1, **characterized in that** the anode material satisfies at least one of the following:
the anode material has a specific surface area of 0.8 m²/g to 25 m²/g; or
the anode material has a specific surface area of 2 m²/g to 10 m²/g; or
the anode material has a specific surface area of 0.8 m²/g, 1 m²/g, 2 m²/g, 3 m²/g, 5 m²/g, 8 m²/g, 10 m²/g, 15 m²/g, 20 m²/g, 25 m²/g, or any value within a range defined by any two above values.

12. The anode material according to claim 1, **characterized in that** the anode material satisfies one of the following:
the anode material has a powder compaction density of 0.8 g/cm³ to 1.5 g/cm³; or
the anode material has a powder compaction density of 1 g/cm³ to 1.2 g/cm³; or
the anode material has a powder compaction density of 0.8 g/cm³, 0.9 g/cm³, 1.0 g/cm³, 1.1 g/cm³, 1.2 g/cm³, 1.3 g/cm³, 1.4 g/cm³, 1.5 g/cm³, or any value within a range defined by any two above values.

13. The anode material according to claim 1, **characterized in that** the anode material satisfies one of the following:
based on mass of the anode material, carbon element in the anode material accounts for a mass content of 15% to 65% by mass percentage;
based on mass of the anode material, carbon element in the anode material accounts for a mass content of 20% to 60% by mass percentage; or
the carbon element in the anode material accounts for a mass content of 15%, 20%, 25%, 30%, 35%, 40%, 45%, 50%, 55%, 60%, 65%, or any value within a range defined by any two above values.

14. The anode material according to claim 1, **characterized in that** the anode material satisfies at least one of the following:
based on mass of the anode material, oxygen element in the anode material accounts for a mass content of ≤10% by mass percentage; or
the oxygen element accounts for a mass content of 1%, 2%, 3%, 4%, 5%, 6%, 8%, or any value within a range defined by any two above values.

15. The anode material according to claim 1, **characterized in that** the anode material satisfies one of the following:
the anode material has pores, and the anode material has a porosity of 0.5% to 15%; or
the anode material has a porosity of 0.5%, 1%, 2%, 3%, 5%, 8%, 10%, 15%, or any value within a range defined by any two above values.

16. A secondary battery, **characterized in that** the secondary battery comprises the anode material according to any one of claims 1-15.
